(19) **Europäisches Patentamt / European Patent Office / Office européen des brevets**

(11) **EP 3 901 005 B1**

(12) **FASCICULE DE BREVET EUROPEEN**

(45) Date de publication et mention de la délivrance du brevet:
**17.01.2024 Bulletin 2024/03**

(21) Numéro de dépôt: **21168141.6**

(22) Date de dépôt: **13.04.2021**

(51) Classification Internationale des Brevets (IPC):
**B62D 15/02** (2006.01)   **B62D 6/00** (2006.01)
**G05D 1/02** (2020.01)

(52) Classification Coopérative des Brevets (CPC):
**B62D 15/025; B62D 6/00; B62D 15/0245; G05D 1/0212;** G05D 2201/0213

(54) **SYSTÈME ET PROCÉDÉ DE PILOTAGE D'UN SYSTÈME DE CONTRÔLE LATÉRAL D'UN VÉHICULE AUTOMOBILE EN FONCTION D'UNE MODÉLISATION D'UN SYSTÈME DE BRAQUAGE DES ROUES**

SYSTEM UND VERFAHREN ZUR STEUERUNG EINES SEITENSTEUERUNGSSYSTEMS EINES KRAFTFAHRZEUGS IN ABHÄNGIGKEIT VON EINER MODELLIERUNG EINES RADLENKUNGSSYSTEMS

SYSTEM AND METHOD FOR PILOTING A LATERAL CONTROL SYSTEM OF A MOTOR VEHICLE ACCORDING TO A MODEL OF A SYSTEM FOR STEERING THE WHEELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2020 FR 2003943**

(43) Date de publication de la demande:
**27.10.2021 Bulletin 2021/43**

(73) Titulaire: **Renault s.a.s**
**92100 Boulogne Billancourt (FR)**

(72) Inventeurs:
• **GONZALEZ BAUTISTA, David**
**78210 Saint Cyr l'école (FR)**

• **MAHTOUT, Imane**
**95200 Sarcelles (FR)**
• **MILANES, Vicente**
**92100 Boulogne-Billancourt (FR)**
• **NAVAS MATOS, Francisco Martin**
**75013 PARIS (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**KR-A- 20180 138 324     US-A- 5 979 581**
**US-A1- 2017 233 001**

**Description**

La présente invention concerne le domaine du contrôle d'une trajectoire d'un véhicule automobile, et plus particulièrement un système et un procédé de commande d'un système de contrôle latéral du véhicule.

Pour particulièrement, la présente invention concerne le domaine des aides à la conduite d'un véhicule automobile, et notamment l'assistance du conducteur pour activer ou non les systèmes d'aides à la conduite.

Les véhicules automobiles sont aujourd'hui équipés de dispositifs d'assistance à la conduite avancés, dits « advanced driver assistance systems », d'acronyme ADAS en termes anglo-saxons, de plus en plus performants. Un dispositif d'assistance à la conduite avancé a pour but de permettre la conduite autonome d'un véhicule automobile, c'est-à-dire sans intervention de la part du conducteur, ou en partage avec le conducteur du véhicule afin de maintenir le véhicule dans sa voie de circulation et/ou ralentir sa vitesse. En particulier, un dispositif d'assistance à la conduite avancé peut servir à anticiper un chemin et/ou une trajectoire d'un véhicule automobile. Dans la présente demande, le chemin d'un véhicule sera considéré comme une forme géométrique correspondant à la progression du véhicule entre un point de départ et un point d'arrivée. La trajectoire d'un véhicule sera considérée comme l'évolution temporelle de la position du véhicule entre le point de départ et le point d'arrivée.

Les véhicules dits « autonomes » ou à conduite partiellement assistée nécessitent un modèle riche de l'environnement du véhicule afin de permettre à un algorithme de prendre des décisions. Cela est rendu possible grâce à différents capteurs proprioceptifs, tels qu'un accéléromètre, un gyromètre, etc, et extéroceptifs, tels que les caméras, radars, lidars, ultrasons, etc, ainsi que des procédés de fusion de données configurés pour traiter l'information reçue et calculer l'état (position, vitesse, accélération, angle de lacet, etc) du véhicule et des objets environnants.

Dans de tels véhicules, il est ainsi indispensable de prédire les mouvements du véhicule dit« ego », ainsi que d'autres objets mobiles ou immobiles présents dans l'environnement proche dudit véhicule et capables de devenir des obstacles lorsque la trajectoire du véhicule ego vient interférer avec la trajectoire d'un objet.

On connaît, par exemple, les systèmes d'aide au maintien de voie dits « lane keeping assist », d'acronyme « LKA » en termes anglo-saxons, qui permettent de repositionner automatiquement le véhicule sur sa voie ou encore les systèmes dits « lane change assist », d'acronyme « LCA » en termes anglo-saxons, qui permettent un changement de voie du véhicule.

D'autres exemples d'aide à la conduite sont connus, tels les systèmes d'aide dits « automatic emergency steering » d'acronyme « AES » en termes anglo-saxons, capables de détecter les obstacles et de procéder à un braquage d'urgence, la prédiction des trajectoires des objets mobiles permettant d'analyser le risque de collision potentiel, ou encore les systèmes d'aide dits « adaptive cruise control », d'acronyme « ACC » en termes anglo-saxons, capables de réguler la vitesse et de maintenir automatiquement une distance de sécurité par rapport au véhicule qui précède.

Les dispositifs d'assistance à la conduite avancés agissent sur la direction du véhicule en modifiant l'angle de braquage des roues directrices du véhicule.

Il est généralement choisi de mettre en oeuvre une loi de commande douce et évitant les à-coups. On évite ainsi de surprendre le conducteur et on améliore le confort des occupants du véhicule.

On connaît du document US 9,731,755 B1, un procédé de contrôle latéral d'un véhicule automobile configuré pour établir un modèle mathématique de la dynamique du véhicule comprenant une variable d'état, une variable de commande de direction et un facteur de perturbation de la route.

Toutefois, un tel procédé n'est pas adaptable à l'ensemble des systèmes de braquage utilisés dans les véhicules automobiles.

La demande US2017/233001A1, révélant les caractéristiques des préambules des revendications 1 et 7, décrit un procédé de contrôle latéral pour véhicules automobiles présentant des inconvénients similaires.

Les procédés actuels de contrôle latéral du véhicule sont en effet actuellement différents d'un système de braquage à l'autre, ce qui génère des coûts élevés pour modifier les procédés en fonction du modèle de véhicule.

Il existe un besoin de fournir un dispositif et un procédé de commande du contrôle du système de contrôle latéral du véhicule automobile polyvalents, c'est à dire applicables sur de nombreux types de véhicules automobiles.

Au vu de ce qui précède, l'invention a pour but de permettre la commande du contrôle du système de contrôle latéral du véhicule automobile en palliant les inconvénients précités.

Un objectif de l'invention réside également dans la suppression des étapes de calibration du système de contrôle latéral.

La présente invention a pour objet un procédé de pilotage d'un système de contrôle latéral d'un véhicule automobile comprenant un système de braquage des roues configuré pour commander les roues directrices du véhicule, dans lequel :

- on calcule une erreur de positionnement latéral du véhicule notamment en fonction d'une accélération latérale souhaitée du véhicule et de la vitesse du véhicule et d'une cadence d'acquisition de la position, la vitesse du véhicula correspondant à une vitesse mesurée au niveau des roues.

Selon le procédé, on modélise la dynamique véhicule en fonction de la vitesse du véhicule et d'une valeur d'angle du volant ;

- on calcule une valeur d'angle maximal du volant en fonction de l'erreur de positionnement latérale calculée, et
- on modélise le système du braquage en fonction d'une relation d'angle de volant donnée par le constructeur entre un angle maximum du volant et la vitesse du véhicule, on compare la valeur maximale de l'angle maximal du volant avec la relation d'angle de volant, généralement fournie constructeur du système de braquage des roues, et on transmet la valeur d'angle du volant la plus petite des deux à la modélisation de la dynamique du véhicule.

Le système de contrôle latéral du véhicule est ainsi adapté en permanence en fonction de la modélisation du système de braquage des roues.

Avantageusement, lors de la modélisation de la dynamique véhicule, on calcule une valeur de vitesse latérale et une vitesse de lacet.

La différence entre la valeur de la vitesse de lacet et une vitesse de lacet souhaitée peut être transmise au système de contrôle latéral du véhicule.

Avantageusement, lors de la modélisation des coordonnées globales du véhicule, on calcule des valeurs de vitesses longitudinale et latérale du véhicule en fonction de la valeur de vitesse latérale modélisée, de la vitesse du véhicule et de la vitesse de lacet du véhicule.

Par exemple, on détermine la valeur d'angle maximal du volant en fonction des valeurs de vitesses longitudinale et latérale du véhicule calculées.

Avantageusement, on modélise le système du braquage en fonction d'une relation de vitesse angulaire entre la vitesse angulaire maximale du volant et la vitesse du véhicule. Ces relations sont fournies généralement par le constructeur du système de braquage des roues.

Lors de la modélisation du système de braquage, on génère, en fonction de la relation de vitesse angulaire du volant, une fonction de second ordre pour chaque vitesse du véhicule afin d'obtenir une modélisation du système de braquage pour chaque vitesse du véhicule et on transmet ladite fonction de second ordre lors de la modélisation du véhicule.

Selon un second aspect, l'invention concerne système de pilotage d'un système de contrôle latéral d'un véhicule automobile comprenant un système de braquage des roues configuré pour commander les roues directrices du véhicule, comprenant :

- un module de calcul d'une erreur de positionnement latéral du véhicule notamment en fonction d'une accélération latérale souhaitée du véhicule, d'une vitesse du véhicule et d'une cadence d'acquisition de la position;
- un module de modélisation de la dynamique véhicule en fonction de la vitesse du véhicule et d'une valeur d'angle du volant;
- un module de calcul d'une valeur d'angle maximal du volant en fonction de l'erreur de positionnement latérale calculée ;
- un module de modélisation du système de braquage des roues en fonction d'une relation d'angle de volant, généralement donnée par le constructeur du système de braquage, entre un angle maximum du volant et la vitesse du véhicule, le module de modélisation du système de braquage étant configuré pour comparer la valeur maximale de l'angle maximal du volant avec la relation d'angle de volant issue du constructeur et transmettre la valeur d'angle du volant la plus petite des deux au module de modélisation de la dynamique du véhicule.

Le système de contrôle latéral du véhicule est ainsi adapté en permanence en fonction de ladite modélisation du système de braquage des roues.

Avantageusement, le module de modélisation de la dynamique véhicule est configuré pour calculer une valeur de vitesse latérale modélisée et une vitesse de lacet du véhicule.

Par exemple, le système de pilotage comprend un module de calcul des valeurs de vitesses longitudinale et latérale du véhicule en fonction d'une valeur de vitesse latérale modélisée, de la vitesse du véhicule et de la vitesse de lacet du véhicule.

Le module de modélisation du système du braquage peut être configuré pour générer une fonction de second ordre pour chaque vitesse du véhicule en fonction d'une relation de vitesse angulaire du volant entre la vitesse angulaire maximale du volant et la vitesse du véhicule et pour la transmettre au module de modélisation de la dynamique du véhicule. La relation de vitesse angulaire du volant est, par exemple, fournie par le constructeur du système de braquage des roues.

Selon un autre aspect, l'invention concerne un véhicule automobile comprenant un système de braquage des roues, un système de contrôle latéral du véhicule et un système de pilotage dudit système de contrôle latéral tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :

[Fig.1] représente schématiquement un système de pilotage d'un système de contrôle latéral d'un véhicule automobile en fonction d'une modélisation d'un système de braquage des roues selon un mode de réalisation de l'invention ; et

[Fig.2] illustre un organigramme d'un procédé de pilotage d'un système de contrôle latéral du véhicule en fonction d'une modélisation du système de braquage des roues selon un mode de réalisation de l'invention mis en oeuvre par le système de la figure 1.

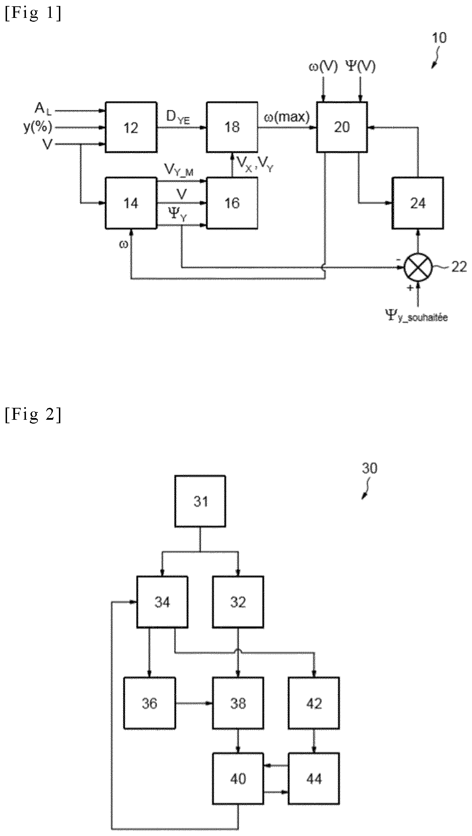

Sur la figure 1, on a représenté de manière très schématique un système 10 de pilotage d'un système de contrôle latéral 24 du véhicule en fonction d'une modélisation d'un système de braquage des roues. Le véhicule comprend un système de contrôle latéral 24 du véhicule et un système de braquage des roues (non représenté) destiné à commander les roues directrices du véhicule. Le système de pilotage 10 du système de contrôle latéral 24 est configuré pour modéliser la réponse du système de braquage des roues en fonction de tout type de système de braquage des roues et implémenter ladite modélisation dans un modèle de la dynamique du véhicule.

Le système de pilotage 10 comprend un module 12 de calcul d'une erreur de positionnement latéral $D_{YE}$ du véhicule en fonction d'une accélération latérale du véhicule souhaitée $A_L$, d'une cadence ou fréquence y(%) de réception d'informations de position par le système de contrôle latéral 24 du véhicule et d'une vitesse du véhicule V.

L'erreur de positionnement latéral $D_{YE}$ correspond à un écart latéral au point de contrôle par rapport à la trajectoire.

L'accélération latérale du véhicule souhaitée $A_L$ correspond à une accélération latérale fixée en fonction du trajet.

La cadence ou fréquence y(%) de réception d'informations de position correspond à la fréquence d'acquisition de données de localisation, donnée généralement par le fournisseur du capteur.

Le module 12 de calcul d'une erreur de positionnement latéral du véhicule calcule la valeur instantanée maximale de l'erreur latérale qui doit être corrigée par le système de braquage.

L'erreur de positionnement latéral $D_{YE}$ du véhicule s'écrit selon l'équation suivante :

[Math 1]
$$D_{yE} = \sqrt{(y_c^2 - (\varDelta d - x_c)^2}$$

Avec:

$\Delta$d, une fonction de la vitesse v et de la cadence de position y(%);
$y_c$, l'ordonnée de la trajectoire définie en fonction du rayon de courbure R de la trajectoire définie selon les équations suivantes :

[Math 2]
$$y_c = -R + \frac{R}{\varDelta d}.x_c$$

et

[Math 3]
$$R = \frac{V^2}{A_L}$$

L'abscisse de la trajectoire $x_c$ est définie selon l'équation suivante :

[Math 4]
$$(x_c)^2 + (y_c + R)^2 = R^2$$

Le système de pilotage 10 comprend un module 14 de modélisation de la dynamique véhicule recevant en entrée la vitesse V du véhicule et d'une valeur d'angle du volant $\omega$. Le module 14 de modélisation de la dynamique véhicule est configuré pour déterminer une valeur de vitesse latérale modélisée $V_{y\_M}$ et une vitesse de lacet $\Psi_y$ du véhicule.

Le système de pilotage 10 comprend en outre un module 16 de modélisation des coordonnées globales du véhicule recevant en entrée la valeur de vitesse latérale modélisée $V_{y\_M}$, la vitesse V du véhicule et la vitesse du lacet $\Psi_y$ du véhicule. Le module 16 de modélisation des coordonnées globales du véhicule est configuré pour calculer les vitesses longitudinale et latérale du véhicule $V_x$, $V_y$.

Le système de pilotage 10 comprend en outre un module 18 de calcul d'une valeur d'angle maximal du volant $\omega(max)$ en fonction des vitesses longitudinale et latérale du véhicule $V_x$, $V_y$ modélisées et de l'erreur de positionnement latéral $D_{YE}$ maximale calculée.

Le système de pilotage 10 comprend en outre un module 20 de modélisation du système du braquage en fonction de la relation $\omega(V)$ entre l'angle maximum du volant $\omega$ donnée par le constructeur et la vitesse V du véhicule et en fonction de la relation $\Psi(V)$ entre la vitesse angulaire maximale du volant $\Psi$ et la vitesse V du véhicule. Ces relations sont fournies généralement le constructeur du système de braquage des roues.

Le module 20 de modélisation du système du braquage compare la valeur maximale de l'angle maximal du volant $\omega(max)$ issue du module de calcul 18 avec la valeur $\omega(V)$ issue du constructeur pour la vitesse V donnée et utilise la valeur la petite faible des deux.

Le module 20 de modélisation du système du braquage génère en fonction de la relation $\Psi(V)$ entre la vitesse angulaire maximale du volant $\Psi$ et la vitesse V du véhicule, une fonction de second ordre pour chaque vitesse du véhicule et transmet ladite fonction dans le module 14 de modélisation du véhicule afin d'obtenir une modélisation du système de braquage pour chaque vitesse V du véhicule. Le module 20 de modélisation est connecté au contrôleur 24 de sorte à modifier la loi de contrôle à chaque itération. Le dispositif est ainsi capable de calculer et d'adapter la loi de contrôle en temps réel mais également en mode de simulation.

La fonction de second ordre G(s) s'écrit selon l'équation suivante :

[Math 5]

$$G(s) = K_G(V_t) \cdot \frac{\omega_n(V_t)^2}{s^2 + 2\xi(V_t) \cdot \omega_n(V_t) \cdot s + \omega_n(V_t)^2}$$

Avec :

$K_G$, le gain du système de braquage dépendant de la vitesse longitudinale instantanée du ($V_t$) véhicule.

$\omega_n$, la fréquence du système de braquage dépendant de la vitesse longitudinale $V_t$ du véhicule; et

$\xi$, un facteur d'amortissement dépendant de la vitesse longitudinale instantanée $V_t$ du véhicule. $K_G$, $\omega_n$ et $\xi$ sont calculés dans le module de calcul 18, par exemple en utilisant un algorithme d'identification, par exemple de type ARX.

Le système de pilotage 10 comprend en outre un soustracteur 22 configuré pour soustraire la valeur de la vitesse du lacet $\Psi_y$ issue du module 14 de modélisation du véhicule à une vitesse du lacet souhaitée $\Psi_{y\_souhaitée}$ et pour transmettre ladite différence au contrôleur latéral 24 du véhicule afin d'adapter les paramètres du contrôleur latéral 24 sont automatiquement adaptés en fonction de la modélisation du système de braquage et notamment de la valeur maximale de l'angle du volant $\omega$ et de la vitesse angulaire du volant $\Psi$ autorisée par ledit système de braquage des roues. La vitesse du lacet souhaitée $\Psi_{y\_souhaitée}$ est calculée à partir de la trajectoire souhaitée, la position actuelle du véhicule et le point de contrôle.

Tel qu'illustré sur la figure 2, un procédé 30 de pilotage d'un système de contrôle latéral 24 du véhicule en fonction d'une modélisation du système de braquage.

Le procédé 30 comprend une étape 31 de récupération de paramètres d'états du véhicule, par exemple à partir de capteur (s) (non représentés). L'étape 31 permet de récupérer notamment la vitesse du véhicule V et l'accélération latérale souhaitée $A_L$.

Le procédé 30 comprend une étape 32 de calcul d'une erreur de positionnement latéral du véhicule $D_{YE}$ en fonction d'une accélération latérale souhaitée $A_L$, d'une cadence y(%) de réception d'information de position par le système de contrôle latéral 24 du véhicule et d'une vitesse du véhicule V.

Le calcul de l'erreur de positionnement latéral du véhicule $D_{YE}$ correspond à la valeur instantanée maximale de l'erreur latérale qui doit être corrigée par le système de braquage et se calcule selon les équations Math 1 à Math 4 ci-dessus.

Le procédé 30 comprend en outre une étape 34 de modélisation de la dynamique véhicule en fonction de la vitesse V du véhicule et d'une valeur d'angle du volant $\omega$ et configuré pour déterminer une valeur de vitesse latérale modélisée $V_{y\_M}$ et une vitesse de lacet $\Psi_y$ du véhicule.

Le procédé 30 comprend en outre une étape 36 de modélisation des coordonnées globales du véhicule en fonction de la valeur de vitesse latérale modélisée $V_{y\_M}$, la vitesse V du véhicule et la vitesse de lacet $\Psi_y$ du véhicule. Lors de l'étape 36 de modélisation des coordonnées globales du véhicule on calcule les vitesses longitudinale et latérale du véhicule $V_x$, $V_y$.

Le procédé 30 comprend en outre une étape 38 de calcul d'une valeur d'un angle maximal du volant $\omega(max)$ en fonction des vitesses longitudinale et latérale du véhicule $V_x$, $V_y$ modélisées et de l'erreur de positionnement latéral $D_{YE}$ maximale calculée.

On réalise, à l'étape 40, la modélisation du système du braquage en fonction de la relation $\omega(V)$ entre l'angle maximum du volant $\omega$ donné par le constructeur et la vitesse V du véhicule et en fonction de la relation $\Psi(V)$ entre la vitesse angulaire maximale de volant $\Psi$ et la vitesse V du véhicule. Ces relations sont fournies généralement par le constructeur du système de braquage des roues.

Lors de l'étape 40 de modélisation du système de braquage on compare la valeur maximale de l'angle maximal du volant $\omega(max)$ issue du module de calcul 18 avec la valeur $\omega(V)$ issue du constructeur pour une vitesse V donnée et utilise la valeur la petite faible des deux pour déterminer la valeur d'angle du volant à appliquer.

Lors de l'étape 40 de modélisation du système de braquage, on génère, en fonction de la relation $\Psi(V)$ entre la vitesse angulaire maximale du volant $\Psi$ et la vitesse V du véhicule, une fonction de second ordre G(s) pour chaque vitesse du véhicule afin d'obtenir une modélisation du système de braquage pour chaque vitesse V du véhicule et on transmet ladite fonction à l'étape 34 de modélisation du véhicule.

La fonction de second ordre G(s) s'écrit selon l'équation Math 5 ci-dessus.

La valeur de la vitesse de lacet $\Psi_y$ calculée à l'étape 34 de modélisation de la dynamique du véhicule est ensuite soustraite, à l'étape 42, à une vitesse de lacet souhaitée $\Psi_{y\_souhaitée}$ et on transmet, à l'étape 44, la différence au système de contrôle latéral 24 du véhicule.

Ainsi, les paramètres du contrôleur latéral 24 sont automatiquement adaptés en fonction de la modélisation du système de braquage et notamment de la valeur maximale de l'angle du volant $\omega(max)$ et de la vitesse angulaire du volant autorisée par ledit système de braquage des roues.

**Revendications**

1. Procédé (30) de pilotage d'un système de contrôle latéral (24) d'un véhicule automobile comprenant un système de braquage des roues configuré pour commander les roues directrices du véhicule, dans lequel :

   - on calcule une erreur de positionnement latéral du véhicule ($D_{YE}$) notamment en fonction d'une accélération latérale souhaitée du véhicule ($A_L$) et d'une vitesse du véhicule (V) ;
   - on modélise la dynamique véhicule en fonction de la vitesse (V) du véhicule et d'une valeur d'angle du volant ($\omega$) ;

   le procédé étant **caractérisé en ce que** :

   - on calcule une valeur d'angle maximal du volant ($\omega(max)$) en fonction de l'erreur de positionnement latérale ($D_{YE}$) calculée,
   - on modélise le système du braquage en fonction d'une relation d'angle de volant ($\omega(V)$) entre un angle maximum du volant ($\omega$) et la vitesse (V) du véhicule, on compare la valeur maximale de l'angle maximal du volant ($\omega(max)$) avec la relation d'angle de volant ($\omega(V)$) issue du constructeur et on transmet la valeur d'angle du volant ($\omega$) la plus petite des deux à la modélisation de la dynamique du véhicule.

2. Procédé (30) selon la revendication 1, dans lequel lors de la modélisation de la dynamique véhicule, on calcule une valeur de vitesse latérale ($V_{y\_M}$) et une vitesse de lacet ($\Psi_y$) du véhicule.

3. Procédé (30) selon la revendication 2, dans lequel lors de la modélisation des coordonnées globales du véhicule, on calcule des valeurs de vitesses longitudinale et latérale du véhicule ($V_x$, $V_y$) en fonction de la valeur de vitesse latérale modélisée ($V_{y\_M}$), de la vitesse (V) du véhicule et de la vitesse de lacet ($\Psi_y$) du véhicule.

4. Procédé (30) selon la revendication 3, dans lequel on détermine la valeur d'angle maximal du volant ($\omega(max)$) en fonction des valeurs de vitesses longitudinale et latérale du véhicule ($V_x$, $V_y$) calculées.

5. Procédé (30) selon l'une quelconque des revendications précédentes, dans lequel on modélise le système du braquage en fonction d'une relation de vitesse angulaire ($\Psi(V)$) entre la vitesse angulaire maximale du volant ($\Psi$) et la vitesse (V) du véhicule.

**6.** Procédé (30) selon la revendication 5, dans lequel lors de la modélisation du système de braquage, on génère, en fonction de la relation de vitesse angulaire du volant ($\Psi(V)$), une fonction de second ordre (G(s)) pour chaque vitesse du véhicule afin d'obtenir une modélisation du système de braquage pour chaque vitesse (V) du véhicule et on transmet ladite fonction de second ordre (G(s)) lors de la modélisation du véhicule.

**7.** Système (10) de pilotage d'un système de contrôle latéral (24) d'un véhicule automobile comprenant un système de braquage des roues configuré pour commander les roues directrices du véhicule, comprenant :

- un module (12) de calcul d'une erreur de positionnement latéral du véhicule ($D_{YE}$) notamment en fonction d'une accélération latérale souhaitée du véhicule ($A_L$) et d'une vitesse du véhicule (V) et d'une cadence d'acquisition de la position y(%) ;
- un module (14) de modélisation de la dynamique véhicule en fonction de la vitesse (V) du véhicule et d'une valeur d'angle du volant ($\omega$); le système étant **caractérisé en ce qu'**il comprend en outre:

    - un module (18) de calcul d'une valeur d'angle maximal du volant ($\omega(max)$) en fonction de l'erreur de positionnement latérale ($D_{YE}$) calculée ;
    - un module (20) de modélisation du système de braquage des roues en fonction d'une relation d'angle de volant ($\omega(V)$) entre un angle maximum du volant ($\omega$) et la vitesse (V) du véhicule, le module (20) étant configuré pour comparer la valeur maximale de l'angle maximal du volant ($\omega(max)$) avec la relation d'angle de volant ($\omega(V)$) issue du constructeur et transmettre la valeur d'angle du volant ($\omega$) la plus petite des deux au module (14) de modélisation de la dynamique du véhicule.

**8.** Système (10) selon la revendication 7, comprenant le module (14) de modélisation de la dynamique véhicule est configuré pour calculer une valeur de vitesse latérale modélisée ($V_{y\_M}$) et une vitesse de lacet($\Psi_y$) du véhicule.

**9.** Système (10) selon la revendication 8, comprenant un module (16) de calcul des valeurs de vitesses longitudinale et latérale du véhicule ($V_x$, $V_y$) en fonction d'une valeur de vitesse latérale modélisée ($V_{y\_M}$), de la vitesse (V) du véhicule et de la vitesse de lacet ($\Psi_y$) du véhicule.

**10.** Système (10) selon la revendication dans lequel le module (20) de modélisation du système du braquage est configuré pour générer une fonction de second ordre (G(s)) pour chaque vitesse du véhicule en fonction d'une relation de vitesse angulaire du volant ($\Psi(V)$) entre la vitesse angulaire maximale du volant ($\Psi$) et la vitesse (V) du véhicule et pour la transmettre au module (14) de modélisation de la dynamique du véhicule.

**11.** Véhicule automobile comprenant un système de braquage des roues, un système de contrôle latéral du véhicule et un système de pilotage dudit système de contrôle latéral selon l'une quelconques des revendications 7 à 10.

**Patentansprüche**

**1.** Verfahren (30) zur Ansteuerung eines Seitensteuerungssystems (24) eines Kraftfahrzeugs, das ein Lenksystem für die Räder beinhaltet, das dazu konfiguriert ist, die gelenkten Räder des Fahrzeugs zu steuern, wobei:

- ein Seitenpositionierungsfehler des Fahrzeugs ($D_{YE}$) insbesondere in Abhängigkeit von einer gewünschten Seitenbeschleunigung des Fahrzeugs ($A_L$) und einer Geschwindigkeit des Fahrzeugs (V) berechnet wird;
- die Fahrzeugdynamik in Abhängigkeit von der Geschwindigkeit (V) des Fahrzeugs und einem Winkelwert des Lenkrads ($\omega$) modelliert wird;

wobei das Verfahren **dadurch gekennzeichnet ist, dass**:

- ein maximaler Winkelwert des Lenkrads (w(max)) in Abhängigkeit von dem berechneten Seitenpositionierungsfehler ($D_{YE}$) berechnet wird,
- das Lenksystem in Abhängigkeit von einer Lenkradwinkelbeziehung ($\omega(V)$) zwischen einem maximalen Winkel des Lenkrads ($\omega$) und der Geschwindigkeit (V) des Fahrzeugs modelliert wird, der Maximalwert des maximalen Winkels des Lenkrads ($\omega(max)$) mit der vom Hersteller angegebenen Lenkradwinkelbeziehung ($\omega(V)$) verglichen wird und der kleinere Winkelwert des Lenkrads ($\omega$) der beiden an die Modellierung der Dynamik des Fahrzeugs übertragen wird.

2. Verfahren (30) nach Anspruch 1, wobei während der Modellierung der Fahrzeugdynamik ein Seitengeschwindigkeitswert ($V_{y\_M}$) und eine Giergeschwindigkeit ($\psi_y$) des Fahrzeugs berechnet werden.

3. Verfahren (30) nach Anspruch 2, wobei während der Modellierung der globalen Koordinaten des Fahrzeugs Längs- und Seitengeschwindigkeitswerte des Fahrzeugs ($V_x$, $V_y$) in Abhängigkeit von dem modellierten Seitengeschwindigkeitswert ($V_{y\_M}$), der Geschwindigkeit (V) des Fahrzeugs und der Giergeschwindigkeit ($\psi_y$) des Fahrzeugs berechnet werden.

4. Verfahren (30) nach Anspruch 3, wobei der maximale Winkelwert des Lenkrads (w(max)) in Abhängigkeit von den berechneten Längs- und Seitengeschwindigkeitswerten des Fahrzeugs ($V_x$, $V_y$) bestimmt wird.

5. Verfahren (30) nach einem beliebigen der vorhergehenden Ansprüche, wobei das Lenksystem in Abhängigkeit von einer Winkelgeschwindigkeitsbeziehung ($\psi(V)$) zwischen der maximalen Winkelgeschwindigkeit des Lenkrads ($\psi$) und der Geschwindigkeit (V) des Fahrzeugs modelliert wird.

6. Verfahren (30) nach Anspruch 5, wobei während der Modellierung des Lenksystems eine Funktion zweiter Ordnung (G(s)) für jede Geschwindigkeit des Fahrzeugs in Abhängigkeit von der Winkelgeschwindigkeitsbeziehung des Lenkrads ($\psi(V)$) erzeugt wird, um eine Modellierung des Lenksystems für jede Geschwindigkeit (V) des Fahrzeugs zu erhalten, und die Funktion zweiter Ordnung (G(s)) während der Modellierung des Fahrzeugs übertragen wird.

7. System (10) zur Ansteuerung eines Seitensteuerungssystems (24) eines Kraftfahrzeugs, das ein Lenksystem für die Räder beinhaltet, das dazu konfiguriert ist, die gelenkten Räder des Fahrzeugs zu steuern, beinhaltend:

- ein Modul (12) zur Berechnung eines Seitenpositionierungsfehlers des Fahrzeugs ($D_{YE}$) insbesondere in Abhängigkeit von einer gewünschten Seitenbeschleunigung des Fahrzeugs ($A_L$) und einer Geschwindigkeit des Fahrzeugs (V) und einer Erfassungshäufigkeit der Position y(%);
- ein Modul (14) zur Modellierung der Fahrzeugdynamik in Abhängigkeit von der Geschwindigkeit (V) des Fahrzeugs und einem Winkelwert des Lenkrads ($\omega$); wobei das System **dadurch gekennzeichnet ist, dass** es ferner Folgendes beinhaltet:

- ein Modul (18) zur Berechnung eines maximalen Winkelwerts des Lenkrads (w(max)) in Abhängigkeit von dem berechneten Seitenpositionierungsfehler ($D_{YE}$);
- ein Modul (20) zur Modellierung des Lenksystems der Räder in Abhängigkeit von einer Lenkradwinkelbeziehung (w(V)) zwischen einem maximalen Winkel des Lenkrads (w) und der Geschwindigkeit (V) des Fahrzeugs, wobei das Modul (20) dazu konfiguriert ist, den Maximalwert des maximalen Winkels des Lenkrads ($\omega$(max)) mit der vom Hersteller angegebenen Lenkradwinkelbeziehung (w(V)) zu vergleichen und den kleineren Winkelwert des Lenkrads (w) der beiden an das Modul (14) zur Modellierung der Dynamik des Fahrzeugs zu übertragen.

8. System (10) nach Anspruch 7, beinhaltend, dass das Modul (14) zur Modellierung der Fahrzeugdynamik dazu konfiguriert ist, einen modellierten Seitengeschwindigkeitswert ($V_{y\_M}$) und eine Giergeschwindigkeit ($\psi_y$) des Fahrzeugs zu berechnen.

9. System (10) nach Anspruch 8, beinhaltend ein Modul (16) zur Berechnung der Längs- und Seitengeschwindigkeitswerte des Fahrzeugs ($V_x$, $V_y$) in Abhängigkeit von einem modellierten Seitengeschwindigkeitswert ($V_{y\_M}$), der Geschwindigkeit (V) des Fahrzeugs und der Giergeschwindigkeit ($\psi_y$) des Fahrzeugs.

10. System (10) nach Anspruch, wobei das Modul (20) zur Modellierung des Lenksystems dazu konfiguriert ist, eine Funktion zweiter Ordnung (G(s)) für jede Geschwindigkeit des Fahrzeugs in Abhängigkeit von einer Winkelgeschwindigkeitsbeziehung des Lenkrads ($\psi(V)$) zwischen der maximalen Winkelgeschwindigkeit des Lenkrads ($\psi$) und der Geschwindigkeit (V) des Fahrzeugs zu erzeugen und sie an das Modul (14) zur Modellierung der Dynamik des Fahrzeugs zu übertragen.

11. Kraftfahrzeug, das ein Lenksystem für die Räder, ein Seitensteuerungssystem des Fahrzeugs und ein System zur Ansteuerung des Seitensteuerungssystems nach einem beliebigen der Ansprüche 7 bis 10 beinhaltet.

**Claims**

1. Method (30) for piloting a lateral-control system (24) for the lateral control of a motor vehicle comprising a wheel-steering system configured to direct the steered wheels of the vehicle, wherein:

   - a vehicle lateral-positioning error ($D_{YE}$) is calculated notably as a function of a vehicle desired lateral acceleration ($A_L$) and of a vehicle speed (V);
   - the vehicle dynamics are modelled as a function of the vehicle speed (V) and of a steering wheel angle value ($\omega$) ;

   said method being **characterized in that**:

   - a maximum steering wheel angle value ($\omega$(max)) is calculated as a function of the calculated lateral-positioning error ($D_{YE}$) ,
   - the steering system is modelled as a function of a steering wheel angle relationship (w(V)) between a maximum steering wheel angle ($\omega$) and the vehicle speed (V), the maximum value of the maximum steering wheel angle ($\omega$(max)) is compared against the steering wheel angle relationship (w(V)) provided by the manufacturer, and the smaller of the two steering wheel angle values (w) is transmitted for modelling the vehicle dynamics.

2. Method (30) according to Claim 1, wherein, when modelling the vehicle dynamics, a vehicle lateral speed ($V_{y\_M}$) value and a vehicle yaw rate ($\psi_y$) are calculated.

3. Method (30) according to Claim 2, wherein, when modelling the overall coordinates of the vehicle, values ($V_x$, $V_y$) for the longitudinal and lateral speeds of the vehicle are calculated as a function of the modelled value of the vehicle lateral speed ($V_{y\_M}$), of the vehicle speed (V) and of the vehicle yaw rate ($\psi_y$).

4. Method (30) according to Claim 3, wherein the maximum steering wheel angle value ($\omega$(max)) is determined as a function of the calculated values for the vehicle longitudinal and lateral speeds ($V_x$, $V_y$).

5. Method (30) according to any one of the preceding claims, wherein the steering system is modelled as a function of an angular-velocity relationship ($\psi$(V)) between the maximum angular velocity of the steering wheel ($\psi$) and the vehicle speed (V).

6. Method (30) according to Claim 5, wherein, when modelling the steering system, a second-order function (G(s)) is generated, for each vehicle speed, as a function of the steering wheel angular-velocity relationship ($\psi$(V)), so as to obtain a model of the steering system for each vehicle speed (V), and said second-order function (G(s)) is transmitted during the modelling of the vehicle.

7. System (10) for piloting a lateral-control system (24) for the lateral control of a motor vehicle comprising a wheel-steering system configured to direct the steered wheels of the vehicle, comprising:

   - a module (12) for calculating a vehicle lateral-positioning error ($D_{YE}$) notably as a function of a vehicle desired lateral acceleration ($A_L$) and of a vehicle speed (V) and of a position-acquisition rate y(%);
   - a module (14) for modelling the vehicle dynamics as a function of the vehicle speed (V) and of a steering wheel angle value (w); the system being **characterized in that** it further comprises:

     - a module (18) for calculating a maximum steering wheel angle value ($\omega$(max)) as a function of the calculated lateral-positioning error ($D_{YE}$);
     - a module (20) for modelling the wheel-steering system as a function of a steering wheel angle relationship ($\omega$(V)) between a maximum steering wheel angle ($\omega$) and the vehicle speed (V), the module (20) being configured to compare the maximum value of the maximum steering wheel angle ($\omega$(max)) against the steering wheel angle relationship (w(V)) provided by the manufacturer, and to transmit the smaller of the two steering wheel angle values ($\omega$) to the module (14) that models the vehicle dynamics.

8. System (10) according to Claim 7, comprising the module (14) for modelling the vehicle dynamics is configured to calculate a modelled value of the vehicle lateral speed ($V_{y\_M}$) and a vehicle yaw rate ($\psi_y$).

9. System (10) according to Claim 8, comprising a module (16) for calculating values ($V_x$, $V_y$) for the vehicle longitudinal and lateral speeds as a function of a modelled value of the vehicle lateral speed ($V_{y\_M}$), of the vehicle speed (V) and of the vehicle yaw rate ($\psi_y$).

10. System (10) according to Claim wherein the module (20) for modelling the steering system is configured to generate, for each vehicle speed, a second-order function (G(s)) as a function of a steering wheel angular-velocity relationship ($\psi(V)$), between the maximum angular velocity ($\psi$) of the steering wheel and the vehicle speed (V), and transmit this to the module (14) that models the vehicle dynamics.

11. Motor vehicle comprising a wheel-steering system, a system for the lateral control of the vehicle, and a system for piloting said lateral-control system according to any one of Claims 7 to 10.

[Fig 1]

[Fig 2]

**RÉFÉRENCES CITÉES DANS LA DESCRIPTION**

**Documents brevets cités dans la description**

- US 9731755 B1

- US 2017233001 A1